# EUROPÄISCHE PATENTSCHRIFT

(11) **EP 3 152 095 B1**
(45) Veröffentlichungstag und Bekanntmachung des Hinweises auf die Patenterteilung: **11.04.2018**
(21) Anmeldenummer: 15722227.4
(22) Anmeldetag: 15.05.2015
(51) Int. Cl.: B62D 5/04, F16H 25/24, F16H 25/22

(54) **KUNSTSTOFFHÜLSE ZUR ABSICHERUNG EINER KUGELUMLENKUNG UND ZUR ZENTRIERUNG EINER WELLFEDER UND EINER PASSSCHEIBE IN EINEM LENKGETRIEBE**
PLASTIC SLEEVE FOR SECURING A BALL RECIRCULATION AND FOR CENTERING A CORRUGATED SPRING AND A SHIM IN A STEERING MECHANISM
DOUILLE EN MATIÈRE PLASTIQUE PERMETTANT D'ASSURER UN RENVOI DES BILLES ET DE CENTRER UNE RONDELLE ONDULÉE ET UNE RONDELLE D'AJUSTAGE DANS UN MÉCANISME DE DIRECTION

(30) Priorität: 03.06.2014 DE 102014007866
(43) Veröffentlichungstag der Anmeldung: 12.04.2017
(73) Patentinhaber: ThyssenKrupp Presta AG, 9492 Eschen (LI); thyssenkrupp AG, 45143 Essen (DE)
(72) Erfinder: NGAMGA NZEPA, Jules, 73733 Esslingen (DE); KONTNER, Dennis, 73033 Göppingen (DE)
(74) Vertreter: thyssenkrupp Intellectual Property GmbH
(86) Internationale Anmeldenummer: PCT/EP2015/060784
(87) Internationale Veröffentlichungsnummer: WO 2015/185345

(56) Entgegenhaltungen:
- DE-A1-102005 023 274
- DE-A1-102011 116 058
- DE-B3-102010 054 134

## Beschreibung

Die vorliegende Erfindung betrifft eine Servolenkung mit den Merkmalen des Oberbegriffs des Anspruchs 1 und eine Hülse für eine solche Servolenkung. Bei Lenkungen eines Kraftfahrzeugs mit einem elektromotorischen Servoantrieb, der über einen Kugelgewindetrieb wirkt, weist die Zahnstange einen Abschnitt auf, der als Gewindespindel ausgebildet ist. Auf der Gewindespindel ist eine Kugelmutter angeordnet, die drehbar auf der Gewindespindel mittels Kugeln gelagert ist. Die Zahnstange mit dem Abschnitt für die Gewindespindel ist in einem Gehäuse untergebracht. Die Kugelmutter ist über ein Wälzlager in diesem Gehäuse drehbar gelagert. Das Wälzlager weist einen Außenring sowie einen Innenring auf. Wie zum Beispiel aus der DE 10 2011 116 058 A1 bekannt ist, stützt sich der Innenring des Wälzlagers einerseits an einer Schulter der Kugelmutter und andererseits an einem Stützring axial ab. Auf diese Weise ist sichergestellt, dass der Innenring einwandfrei positioniert ist. Der Außenring stützt sich über eine Wellfeder an dem Gehäuse ab. Dazu ist eine metallische Hülse zur Positionierung und Zentrierung der Wellfeder zwischen Wellfeder und Gehäuse vorgesehen. Aus der DE 10 2010 054 134 ist eine Kunststoffhülse bekannt, die zur radialen Absicherung einer externen Kugelrückführung über die Kugelmutter geschoben wird. Axial wird die Kunststoffhülse zwischen einer Schulter der Kugelmutter und dem Lagerinnenring angeordnet. Eine benötigte Passscheibe für das Lager wird im Gehäusedeckel integriert.

Es ist ein Ziel der Kraftfahrzeughersteller, das Gewicht der Kraftfahrzeuge zu verringern, da das Gewicht einen massiven Einfluss, nicht nur auf die Herstellungskosten sondern auch auf die C0² Emission der Kraftfahrzeuge hat.

Der Erfindung liegt daher die Aufgabe zugrunde, eine Servolenkung mit einem Kugelgewindetrieb zu schaffen, bei dem die Kugelmutter mittels eines Lagers gegenüber dem Gehäuse abgestützt und die Kugelrückführung der Kugelmutter radial abgesichert ist, wobei Gewicht bei gleichzeitig erleichterter Montage eingespart wird. Weiterhin liegt der Erfindung die Aufgabe zugrunde, eine Hülse für die zuvor genannte Servolenkung anzugeben.

Danach ist eine Servolenkung, insbesondere für ein Kraftfahrzeug, mit einem Servomotor, der eine axial verlagerbare Zahnstange über eine in einem Gehäuse drehbar in einem Lager gelagerte Kugelmutter antreibt, wobei die Kugelmutter mit einer an der Zahnstange ausgebildeten Gewindespindel in Eingriff steht, wobei zwischen dem Lager und dem Gehäuse Federelemente zur axialen elastischen Abstützung angeordnet sind, und wobei die Kugelmutter mit einem Flansch für die Befestigung einer Riemenscheibe und mit einem Lagersitz für das Lager versehen ist, und mit einer auf der Kugelmutter aufgesteckten Hülse, die eine Kugelrückführung an der Kugelmutter sichert und die Kugelmutter zwischen dem Flansch und dem Lagersitz umgibt, vorgesehen, bei der die Hülse an einem lagernahen Ende einen umfangseitigen Vorsprung mit einem Montagesitz für ein flanschnahes Federelement aufweist. Durch diese Ausgestaltung der Servolenkung wird die Kugelmutter mittels eines Lagers gegenüber dem Gehäuse abgestützt und die Kugelrückführung der Kugelmutter radial abgesichert, wobei Gewicht bei gleichzeitig erleichterter Montage eingespart wird.

Vorzugsweise ist das flanschnahe Federelement zwischen einem Außenring des Lagers und einem Ringbund der Hülse angeordnet. So kann das Lager sich mittels des Federelements am Gehäuse abstützten, ohne dass die Rotation der Kugelmutter beeinträchtigt ist.

In einer bevorzugten Ausführungsform weist die Hülse an einer lagernahen Stirnseite des Vorsprungs eine umlaufende Rippe auf, die als Sitz für ein ringförmiges Federelement dient. Dabei ist vorzugsweise das ringförmige Federelement zwischen der Hülse und einem Innenring des Lagers angeordnet. Das ringförmige Federelement dient als Abstützung der Hülse an dem Innenring des Lagers.

Bevorzugt ist wenigstens das flanschnahe Federelement eine Wellfeder. Auch das flanschferne Federelement oder das ringförmige Federelement können Wellfedern sein.

Weiterhin bevorzugt ist zwischen dem flanschnahen Federelement und der Hülse eine Passscheibe eingelegt. Bei herkömmlichen Servolenkungen ist vorgesehen, diese Passscheibe an der überwurfmutternahen Seite des Lagers anzuordnen, in dem die Passscheibe bei der Montage in einem Gehäusedeckel eingelegt ist. In dem vorliegenden Ausführungsbeispiel ist die Montage der Passscheibe deutlich vereinfacht, da sie bereits mit der Wellfeder zusammen auf der Hülse vorzentriert wird.

In einer bevorzugten Ausführungsform weist die Hülse auf einer Außenwandung wenigstens einen Steg in Längsrichtung als Montagehilfe auf. Vorzugsweise sind im montierten Zustand ein geringer Spalt zwischen der Hülse und der Passscheibe sowie dem flanschnahen Federelement in radialer Richtung und ein geringer Spalt zwischen der Passscheibe und der Hülse in axialer Richtung vorgesehen. Dadurch wird gewährleitstet, dass die Hülse sich mit der Kugelmutter frei drehen kann. Der Vorsprung der Hülse dient nur als Montagehilfe für die Wellfeder und die Passscheibe.

Weiterhin bevorzugt ist die Hülse einstückig ausgebildet ist und weist auf ihrer Innenseite bogenförmige, federnde Anlageflächen auf, die auf der äußeren Oberfläche der Kugelmutter mit einem Schiebesitz reibschlüssig anliegen. Der Schiebesitz ist bevorzugt so ausgestaltet, dass im montierten Zustand die Hülse an ihrem flanschnahen Ende in einem geringen Abstand vor dem Flansch endet.

Nachfolgend wird ein Ausführungsbeispiel der Erfindung anhand der Zeichnungen näher beschrieben. Gleiche oder funktionsgleiche Bauteile sind in allen Zeichnungen mit den gleichen Bezugsziffern versehen. Es zeigen:
- Fig. 1:: eine räumliche Ansicht eines Lagers einer Kugelmutter mit erfindungsgemäßer Hülse,
- Fig. 2:: einen Längsschnitt des Lagers aus Fig. 1 entlang A1-A1,
- Fig. 3:: einen Querschnitt der Kugelmutter und der Hülse aus Fig. 2 entlang C1-C1,
- Fig. 4:: einen weiteren Querschnitt der Kugelmutter und der Hülse aus Fig. 1 entlang B1-B1,
- Fig. 5:: eine räumliche Darstellung der Hülse, sowie
- Fig. 6:: einen Längsschnitt eines Kugelgewindetriebs mit erfindungsgemäßer Hülse.

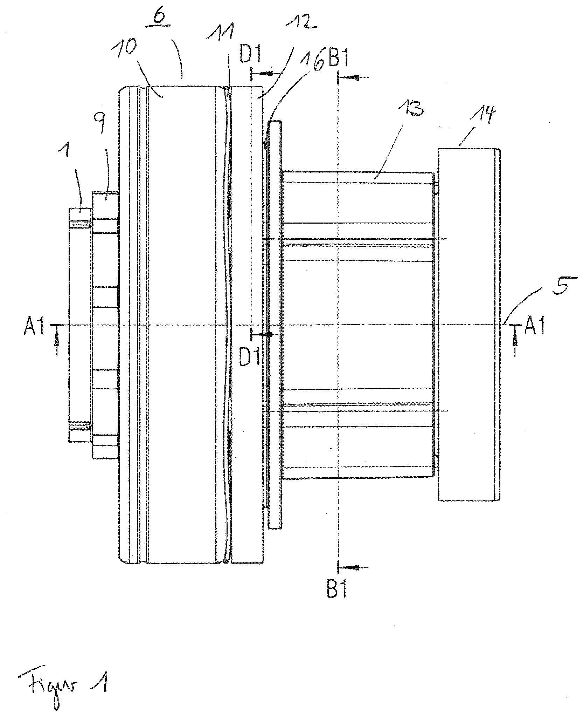

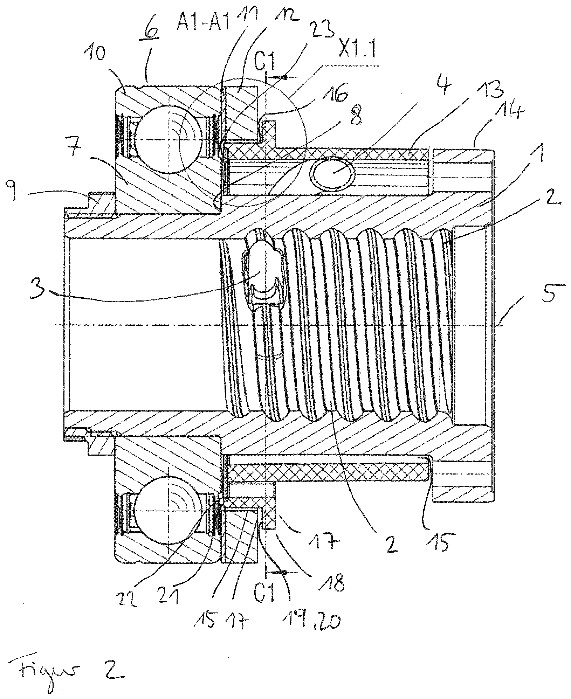

In der Fig. 1 und der Fig. 2 ist ein Ausschnitt aus einer elektrisch angetriebenen Kraftfahrzeugservolenkung dargestellt. Der Ausschnitt zeigt einen Bereich eines Kugelgewindetriebs, in dem eine Kugelmutter 1 mit einer Gewindespindel in Eingriff steht. Die Kugelmutter 1 trägt auf ihrer Innenseite ein Kugelgewinde 2, in dem sich in an sich bekannter Weise nicht dargestellte Kugeln abwälzen. Jeweils eine Bohrung ist für den Eintritt bzw. Austritt von Kugeln für die Rückführung zu dem gegenüberliegenden Ende des Kugelgewindes vorgesehen. In die Bohrung 3 ist eine rohrförmige Kugelrückführung 4 eingesetzt. Die Kugelrückführung 4 ist U-förmig oder bügelförmig ausgebildet und sitzt mit ihrem zweiten, nicht sichtbaren Ende in einer entsprechenden Bohrung, die an dem anderen Ende des Gewindegangs angeordnet ist. Die Kugelmutter 1 ist im Wesentlichen rotationssymmetrisch ausgebildet und weist in dem Bereich, in dem die Kugelrückführung 4 sitzt, eine etwa kreiszylindrische äußere Umfangsfläche auf, die koaxial zu einer Längsachse 5 der nicht dargestellten Gewindespindel orientiert ist. Die Kugelmutter 1 ist in einem Lager 6 drehbar um die Längsachse 5 gelagert. Das Lager 6 weist einen Innenring 7 auf, der einerseits fest auf einem Lagersitz 8 der Kugelmutter 1 sitzt und andererseits von einer Überwurfmutter 9 in Position gehalten ist. Das Lager 6 weist weiter einen Außenring 10 auf, der sich mittels einer Wellfeder 11 und einer Passscheibe 12 an einem nicht dargestellten Gehäuse auf der überwurfmutterfernen Seite abstützt. In diesem Bereich ist das Gehäuse etwa rohrförmig ausgebildet und wird an der überwurfmutternahen Seite von einem Gehäusedeckel verschlossen. Dazu umgreift der Gehäusedeckel das Gehäuse an seiner Außenseite. Zur Absicherung der Kugelrückführung 4 der Kugelmutter 1 und zur Zentrierung der Wellfeder 11 und der Passscheibe 12 bei der Montage ist die Kugelmutter 1 vom Lager 6 ausgehend im Bereich der Kugelrückführung 4 von einer Hülse 13 umgeben. Die Hülse 13 ist auf der Kugelmutter 1 zwischen einem Flansch 14 der Kugelmutter und der überwurfmutterfernen Seite des Lagers 6 angeordnet, wobei zwischen der Hülse 13 und dem Flansch 14 ein geringer Spalt vorgesehen ist. Die Hülse 13 weist eine innere Ausnehmung 15 auf, die so dimensioniert ist, dass die Kugelrückführung 4 spielfrei zwischen der Kugelmutter 1 und der Hülse 13 sitzt. Die Hülse 13 weist weiterhin einen Montagesitz 16 für die Wellfeder 11 und die Passscheibe 12 auf. Zur Bildung des Montagesitzes 16 weist die Hülse 13 an ihrem ersten dem Lager zugewandten Ende 17 einen umfangsseitigen Vorsprung 18 auf. Der Vorsprung 18 wiederum weist einen lagernahen Ringbund 19 auf, der einen axialen Montagesitz 20 für die Passscheibe 12 und die Wellfeder 11 bildet. An einer Stirnseite des Vorsprungs 18 ist eine äußere im Wesentlichen umlaufende Rippe 21 vorgesehen, die einen stirnseitigen Sitz 22 zur Aufnahme eines ringförmigen Federelements 23 bildet. Das Federelement 23 ist zwischen der Hülse 13 und dem Innenring 7 des Lagers 6 angeordnet.

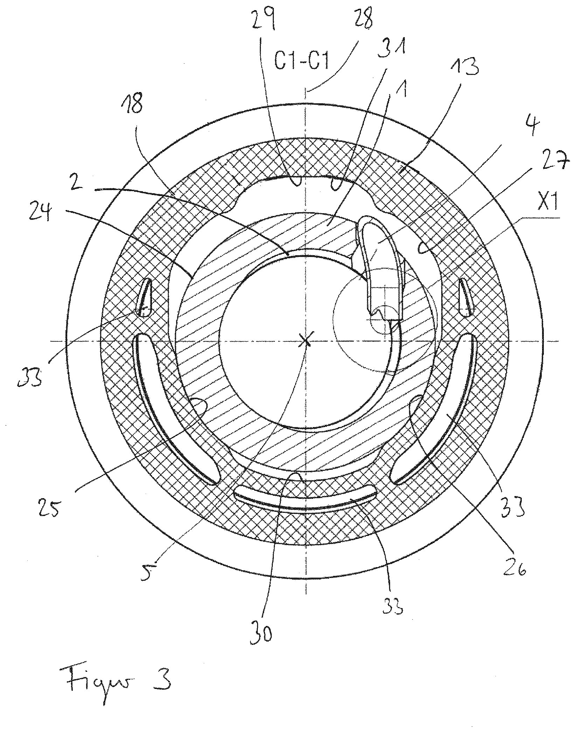

In der Figur 3 ist die Kugelmutter 1 umfassende Hülse 13 in einem Querschnitt auf Höhe des Vorsprungs 18 dargestellt. Die Kugelmutter 1 ist in dem Bereich des Gewindegangs 2 mit einer äußeren zylindermantelförmigen Oberfläche 24 mit einem kreisförmigen Querschnitt versehen. Die Hülse 13 liegt mit zwei Anlageflächen 25, 26 ihrer Innenwandung 27 umfangsseitig an der Oberfläche der Kugelmutter 1 an. Dadurch wird ein fester, reibschlüssiger Sitz der Hülse 13 auf der Kugelmutter 1 gewährleistet. Die Hülse 13 ist im Wesentlichen spiegelsymmetrisch zu einer die Längsachse 5 enthaltenden Symmetrieebene 28 ausgestaltet. Die Anlageflächen 25, 26 erstrecken sich jeweils über etwa 50° des Umfangs und weisen einen ersten kugelrückführungsnahen Zwischenraum 29 von etwa 185° auf, der unteranderem zur Aufnahme der Kugelrückführung 4 dient, und einen kugelrückführungsfernen Zwischenraum 30 von etwa 50° auf. In einem mittleren Bereich 31 des kugelrückführungsnahen Zwischenraums 29, der sich in Umfangsrichtung der äußeren Oberfläche der Kugelmutter 1 über etwa 90° erstreckt, liegt die rohrförmige Kugelrückführung 4 ein. Dieser Bereich 31 ist dabei so ausgestaltet, dass die Kugelrückführung 4 in Richtung der Kugelmutter 1 gepresst wird, so dass eine sichere Absicherung zustande kommt.

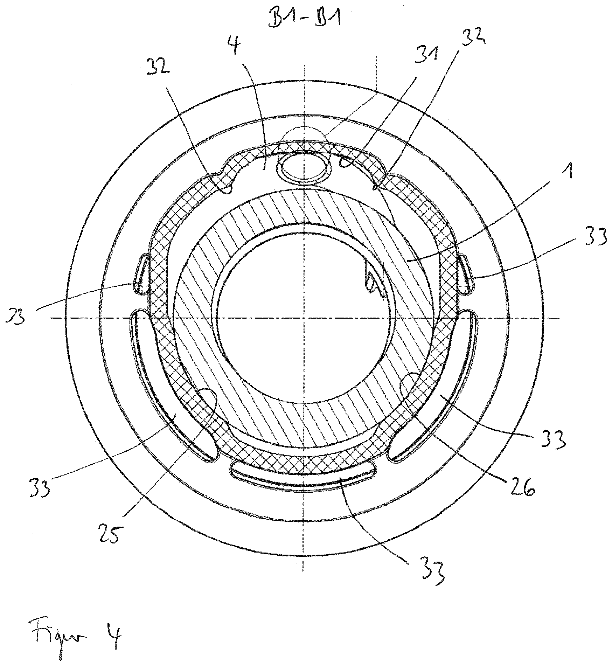

Wie in Figur 4 gezeigt ist, wird dieser Bereich 31 durch zwei in Längsrichtung verlaufende Rippen 32 begrenzt, die einen festen und sichern Sitz der Kugelrückführung 4 in Umfangsrichtung sicherstellen.

Der Vorsprung 18 der Hülse 13 weist Ausnehmungen 33 auf, die ein elastisches Federn der Anlageflächen 25, 26 in Radialrichtung ermöglichen und die so sicherstellen, dass auch bei Temperaturschwankungen, wie sie im Betrieb einer Kraftfahrzeuglenkung zu erwarten sind, die Hülse 13 fest und geräuschfrei auf der Kugelmutter 1 sitzt.

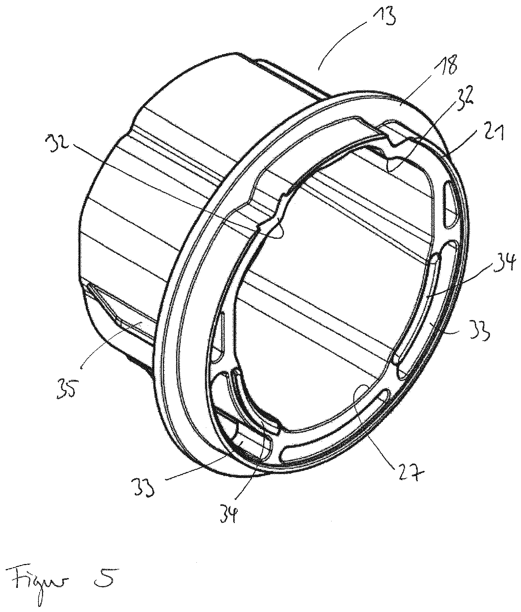

Die Figur 5 zeigt die Hülse 13 in einer perspektivischen Darstellung. In dieser Darstellung ist erkennbar, dass der Vorsprung 18 der Hülse 13 zwei sich teilweise in Umfangsrichtung erstreckende Rippen 34 aufweist. Die Rippen 34 sind jeweils zwischen den Ausnehmungen 33 und der Innenwandung 27 der Hülse 13 angeordnet und erstrecken sich entlang eines Kreises, koaxial zur Längsachse 5. Die Rippen 34 weisen dabei fast die gleiche Länge auf wie die Ausnehmungen 33. Die Rippen 34 zentrieren das ringförmige Federelement 23 im stirnseitigen Sitz 22. Weiterhin ist gut zu erkennen, dass die im Wesentlichen umlaufende Rippe 21 im Bereich der beiden auf der inneren Oberfläche der Hülse 13 in Längsrichtung verlaufenden Rippen 32 unterbrochen ist. Weiterhin sind auf der äußeren Oberfläche der Hülse 13 über den Umfang gleichmäßig verteilt drei sich in Längsrichtung erstreckende Stege 35 vorgesehen. Diese Stege 35 dienen zur Zentrierung der Hülse 13 in einer Riemenscheibe 36.

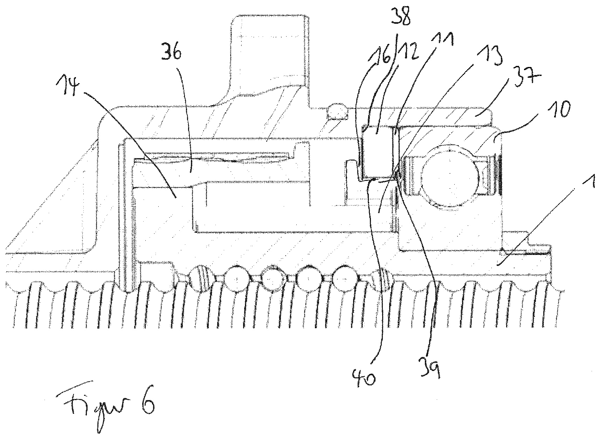

Figur 6 zeigt die auf den Flansch 14 der Kugelmutter 1 drehfest aufgesetzte Riemenscheibe 36. Die Riemenscheibe 36 ist etwa ringförmig ausgebildet und sitzt mit einer Presspassung auf dem äußeren Umfang des Flansches 14. Die Riemenscheibe 36 überragt den Flansch 14 in Richtung der Hülse 13. Dort, wo die Riemenscheibe 36 die Hülse 13 überragt, ist der Innendurchmesser der Riemenscheibe 36 vergrößert. Es bildet sich ein geringer Spalt zwischen der inneren Umfangsfläche der Riemenscheibe 36 und der äußeren Oberfläche der Hülse 13, so dass diese Bauelemente sich bis auf die Stege 35 nicht berühren. Durch die Stege 35 auf der äußeren Oberfläche der Hülse 13 wird die Zentrierung der Hülse 13 in der Riemenscheibe 36 gewährleistet.

Bei der Montage dient der Montagesitz 16 der Hülse 13 als Auflagefläche für die Passscheibe 12 und die Wellfeder 11 in axialer Richtung. Zur Zentrierung liegen die Passscheibe 12 und die Wellfeder 11 mit deutlichem Spiel auf dem Montagesitz 16 der Hülse 13 auf. Nach der Montage stehen die Passscheibe 12 und die Wellfeder 11 umfangseitig in Anlage mit dem Gehäuse 37. Die Passscheibe 12 ist durch einen Ringbund 38 auf der inneren Oberfläche im Gehäuse 37 axial gehalten. Der Außenring 10 des Lagers 6 stützt sich somit mittels der Passscheibe 12 und der Wellfeder 11 am Gehäuse 37 ab. In diesem montierten Zustand sind ein geringer Spalt 39 zwischen der Hülse 13 und der Passscheibe 12 in axialer Richtung und ein geringer Spalt 40 zwischen der Wellfeder 11, der Passscheibe 12 und der Hülse 13 in radialer Richtung gegeben, so dass sich die Hülse 13 mit der Kugelmutter 1 frei drehen lässt.

Die erfindungsgemäße Hülse 1 dient einerseits zur Zentrierung der Passscheibe 12 und der Wellfeder 11 bei der Montage und andererseits dient die Hülse 13 zur Absicherung der Kugelrückführung 4. Die Hülse 13 kombiniert einzelne Bauteile, wodurch Materialkosten und das Gesamtgewicht reduziert werden können. Weiterhin wird durch die Ausgestaltung der Hülse 13 die Montage des Kugelgewindetriebs deutlich vereinfacht.

## Patentansprüche

1. Servolenkung, insbesondere für ein Kraftfahrzeug, mit einem Servomotor, der eine axial verlagerbare Zahnstange über eine in einem Gehäuse (37) drehbar in einem Lager (6) gelagerte Kugelmutter (1) antreibt, wobei die Kugelmutter (1) mit einer an der Zahnstange ausgebildeten Gewindespindel in Eingriff steht, wobei zwischen dem Lager (6) und dem Gehäuse (37) Federelemente (11) zur axialen elastischen Abstützung angeordnet sind, und wobei die Kugelmutter (1) mit einem Flansch (14) für die Befestigung einer Riemenscheibe (36) und mit einem Lagersitz für das Lager (6) versehen ist, und mit einer auf der Kugelmutter (1) aufgesteckten Hülse (13), die eine Kugelrückführung (4) an der Kugelmutter (1) sichert und die Kugelmutter (1) zwischen dem Flansch (14) und dem Lagersitz umgibt, **dadurch gekennzeichnet, dass** die Hülse (13) an einem lagernahen Ende (17) einen umfangseitigen Vorsprung (18) mit einem Montagesitz für ein flanschnahes Federelement (11) aufweist.

2. Servolenkung nach Anspruch 1, **dadurch gekennzeichnet, dass** das flanschnahe Federelement (11) zwischen einem Außenring (10) des Lagers (6) und einem Ringbund (19) der Hülse (13) angeordnet ist.

3. Servolenkung nach Anspruch 1 oder 2, **dadurch gekennzeichnet, dass** die Hülse (13) an einer lagernahen Stirnseite des Vorsprungs (18) eine umlaufende Rippe (21) aufweist, die als Sitz (22) für ein ringförmiges Federelement (23) dient.

4. Servolenkung nach Anspruch 3, **dadurch gekennzeichnet, dass** das ringförmige Federelement (23) zwischen der Hülse (13) und einem Innenring (7) des Lagers (6) angeordnet ist.

5. Servolenkung nach einem der vorhergehenden Ansprüche, **dadurch gekennzeichnet, dass** das Federelement (11) eine Wellfeder ist.

6. Servolenkung nach einem der vorhergehenden Ansprüche, **dadurch gekennzeichnet, dass** zwischen dem flanschnahen Federelement (11) und der Hülse (13) eine Passscheibe (12) eingelegt ist.

7. Servolenkung nach einem der vorhergehenden Ansprüche, **dadurch gekennzeichnet, dass** die Hülse (13) auf einer Außenwandung wenigstens einen Steg (35) in Längsrichtung als Montagehilfe aufweist.

8. Servolenkung nach einem der vorhergehenden Ansprüche 6 oder 7, **dadurch gekennzeichnet, dass** im montierten Zustand ein geringer Spalt (40) zwischen der Hülse (13) und der Passscheibe (12) sowie dem flanschnahen Federelement (11) in radialer Richtung und ein geringer Spalt (39) zwischen der Passscheibe (12) und der Hülse (13) in axialer Richtung sind.

9. Servolenkung nach einem der vorhergehenden Ansprüche, **dadurch gekennzeichnet, dass** die Hülse (13) einstückig ausgebildet ist und auf ihrer Innenseite bogenförmige, federnde Anlageflächen (25, 26) aufweist, die auf der äußeren Oberfläche der Kugelmutter (1) mit einem Schiebesitz reibschlüssig anliegen.

10. Servolenkung nach einem der vorhergehenden Ansprüche, **dadurch gekennzeichnet, dass** die Hülse (13) an ihrem flanschnahen Ende in einem geringen Abstand vor dem Flansch (14) endet.

## Claims

1. Power steering system, in particular for a motor vehicle, having a servomotor which drives an axially movable rack via a ball nut (1) which is mounted in a bearing (6) such that it can be rotated in a housing (37), the ball nut (1) being in engagement with a threaded spindle which is configured on the rack, spring elements (11) for axially elastic support being arranged between the bearing (6) and the housing (37), and the ball nut (1) being provided with a flange (14) for fastening a pulley wheel (36) and with a bearing seat for the bearing (6), and having a sleeve (13) which is plugged on the ball nut (1), secures a ball return means (4) on the ball nut (1), and surrounds the ball nut (1) between the flange (14) and the bearing seat, **characterized in that**, at one end (17) which is close to the bearing, the sleeve (13) has a circumferential-side projection (18) with a mounting seat for a spring element (11) which is close to the flange.

2. Power steering system according to Claim 1, **characterized in that** the spring element (11) which is close to the flange is arranged between an outer ring (10) of the bearing (6) and an annular collar (19) of the sleeve (13).

3. Power steering system according to Claim 1 or 2, **characterized in that**, on an end side of the projection (18) which is close to the bearing, the sleeve (13) has a circumferential rib (21) which serves as a seat (22) for an annular spring element (23).

4. Power steering system according to Claim 3, **characterized in that** the annular spring element (23) is arranged between the sleeve (13) and an inner ring (7) of the bearing (6).

5. Power steering system according to one of the preceding claims, **characterized in that** the spring element (11) is a corrugated spring.

6. Power steering system according to one of the preceding claims, **characterized in that** an adjusting washer (12) is inserted between the spring element (11) which is close to the flange and the sleeve (13).

7. Power steering system according to one of the preceding claims, **characterized in that**, on an outer wall, the sleeve (13) has at least one web (35) in the longitudinal direction as a mounting aid.

8. Power steering system according to either of the preceding Claims 6 and 7, **characterized in that**, in the mounted state, there is a small gap (40) between the sleeve (13) and the adjusting washer (12) and the spring element (11) which is close to the flange in the radial direction, and there is a small gap (39) between the adjusting washer (12) and the sleeve (13) in the axial direction.

9. Power steering system according to one of the preceding claims, **characterized in that** the sleeve (13) is configured in one piece and, on its inner side, has arcuate, resilient bearing faces (25, 26) which bear in a frictionally locking manner on the outer surface of the ball nut (1) with a sliding fit.

10. Power steering system according to one of the preceding claims, **characterized in that**, at its end which is close to the flange, the sleeve (13) ends at a small spacing from the flange (14).

## Revendications

1. Direction assistée, en particulier pour un véhicule automobile, comprenant un servomoteur qui entraîne une crémaillère déplaçable axialement par le biais d' un écrou à billes (1) supporté dans un palier (6) de manière à pouvoir tourner dans un boîtier (37), l'écrou à billes (1) étant en prise avec une broche filetée réalisée sur la crémaillère, des éléments de ressort (11) pour le support élastique étant disposés entre le palier (6) et le boîtier (37), et l'écrou à billes (1) étant pourvu d'une bride (14) pour la fixation d'une poulie à courroie (36) et d'un siège de palier pour le palier (6), et comprenant une douille (13) enfichée sur l'écrou à billes (1), qui assure une recirculation des billes (4) sur l'écrou à billes (1) et qui entoure l'écrou à billes (1) entre la bride (14) et le siège de palier, **caractérisée en ce que** la douille (13) présente, au niveau d'une extrémité proche du palier (17), une saillie périphérique (18) avec un siège de montage pour un élément de ressort proche de la bride (11).

2. Direction assistée selon la revendication 1, **caractérisée en ce que** l'élément de ressort proche de la bride (11) est disposé entre une bague extérieure (10) du palier (6) et un épaulement annulaire (19) de la douille (13).

3. Direction assistée selon la revendication 1 ou 2, **caractérisée en ce que** la douille (13) présente, au niveau d'un côté frontal de la saillie (18) proche du palier, une ailette périphérique (21) qui sert de siège (22) pour un élément de ressort annulaire (23).

4. Direction assistée selon la revendication 3, **caractérisée en ce que** l'élément de ressort annulaire (23) est disposé entre la douille (13) et une bague intérieure (7) du palier (6).

5. Direction assistée selon l'une quelconque des revendications précédentes, **caractérisée en ce que** l'élément de ressort (11) est une rondelle élastique.

6. Direction assistée selon l'une quelconque des revendications précédentes, **caractérisée en ce qu'**entre l'élément de ressort proche de la bride (11) et la douille (13) est introduite une rondelle d'ajustement (12).

7. Direction assistée selon l'une quelconque des revendications précédentes, **caractérisée en ce que** la douille (13) présente, sur une paroi extérieure en tant qu'auxiliaire de montage, au moins une nervure (35) dans la direction longitudinale.

8. Direction assistée selon l'une quelconque des revendications précédentes 6 ou 7, **caractérisée en ce que** dans l'état monté, il est prévu une fente étroite (40) entre la douille (13) et la rondelle d'ajustement (12) ainsi que l'élément de ressort proche de la bride (11) dans la direction radiale et une fente étroite (39) est prévue entre la rondelle d'ajustement (12) et la douille (13) dans la direction axiale.

9. Direction assistée selon l'une quelconque des revendications précédentes, **caractérisée en ce que** la douille (13) est réalisée d'une seule pièce et présente, sur son côté intérieur, des surfaces d'appui élastiques de forme courbe (25, 26) qui s'appliquent par engagement par friction avec un siège coulissant sur la surface extérieure de l'écrou à billes (1).

10. Direction assistée selon l'une quelconque des revendications précédentes, **caractérisée en ce que** la douille (13) se termine au niveau de son extrémité proche de la bride à faible distance de la bride (14).
